# EUROPEAN PATENT APPLICATION

(11) **EP 2 642 572 A2**
(43) Date of publication of application: **25.09.2013**
(21) Application number: 11841113.1
(22) Date of filing: 19.08.2011
(51) Int. Cl.: H01M 8/18, G01N 27/333, H01M 8/02, H01M 8/04, F03B 13/00

(54) **ELECTRODE FOR REDOX FLOW BATTERY, FABRICATION METHOD THEREOF, APPARATUS AND METHOD FOR FABRICATING ELECTROLYTE FOR REDOX FLOW BATTERY, DEVICE AND METHOD FOR MEASURING SELECTED ION CONCENTRATION OF ELECTROLYTE, AND STAND-ALONE BATTERY SYSTEM**

(30) Priority: 15.11.2010 KR 20100113327; 15.11.2010 KR 20100113328; 23.11.2010 KR 20100116569; 23.11.2010 KR 20100116813
(71) Applicant: Wy, Soon Myung, Seoul 135-958 (KR)
(72) Inventor: TAKAMURA, Takstsugu, Ageo-shi Saitama 362-0073 (JP)
(74) Representative: Raffay & Fleck
(86) International application number: PCT/KR2011/006127
(87) International publication number: WO 2012/067338

(57) **Abstract**

The present invention relates to a redox flow battery and a redox battery system, and more particularly, to an electrode constituting a redox flow battery, a method of fabricating the electrode, an apparatus and method for fabricating electrolyte for a redox flow battery, a device and method for measuring a selected ion concentration of electrolyte constituting a redox flow battery, and a stand-alone redox battery system. A stand-alone redox battery system according to the present invention includes a micro hydroelectric power generating device and a redox battery. The micro hydroelectric power generating device includes: a feathering paddle wheel that is rotated by water introduced through a conduit; and a direct current generator that generates direct current according to the rotation of the feathering paddle wheel. The redox battery includes: a stack-type electrode assembly having a stacked structure of unit electrodes; a first electrolyte tank and a second electrolyte tank, which store, respectively, active materials having different oxidation levels; and a first pump and a second pump, which are connected to the first electrolyte tank and the second electrolyte tank, respectively, to circulate the stored active materials through the stack-type electrode assembly, thereby performing charging and discharging operations.

## Description

### [Technical Field]

The present invention relates to a redox flow battery and a redox flow battery system, and more particularly, to an electrode for a redox flow battery configuring the redox flow battery and a method for manufacturing the same, an apparatus for manufacturing an electrolyte for a redox flow battery and a method for manufacturing the same, a selective ion densitometer capable of measuring concentration of the electrolyte configuring the redox flow battery and a method for measuring selective ion concentration, and a self-redox flow battery system.

### [Background Art]

Due to the increased demand in energy around the world and the continuous use of fossil fuel, CO₂ is continuously emitted to cause environmental pollution.

In order to reduce greenhouse gas emissions, new renewable energy such as sunlight, wind power, a fuel cell, and so on, has been in the limelight and practically propagated.

The renewable energy is largely affected by a location environment or a natural condition and thus, the output thereof is greatly varied. The renewable energy cannot be continuously supplied and the time difference between production and demand of energy is caused. As a result, an energy storage system becomes important.

An example of a MW large-capacity power storage battery includes a lead storage battery, a NaS battery, a supercapacitor, a lithium secondary battery, and a redox flow battery (RFB).

Among others, the redox flow battery is a system that is recharged by oxidizing and reducing active materials in an electrolyte unlike a secondary battery according to the related art, which is an electrochemical charging apparatus directly storing chemical energy in an electrolyte as electric energy.

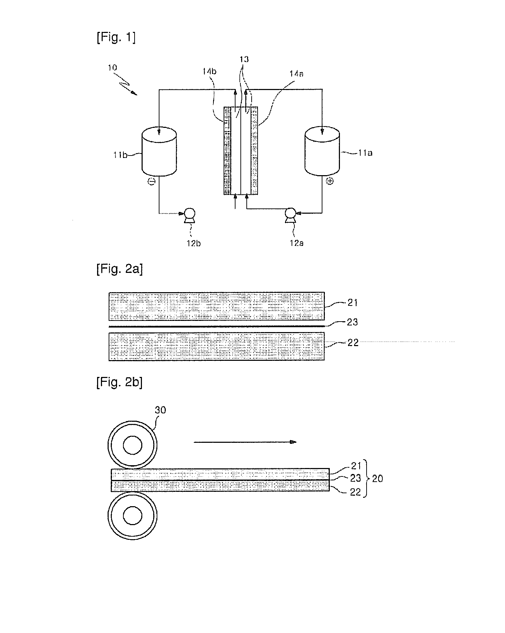

As shown in FIG. 1, a basic structure of the redox flow battery 10 is configured to include positive/negative electrolyte tanks 11a and 11b each of which stores an active material in which an oxidation state is different, pumps 12a and 12b circulating the active materials at the time of charging and discharging, and cathode and anode electrodes 14a and 14b separated by an ion exchange membrane (membrane) 13.

The ion exchange membrane (membrane) 13 is disposed between the two electrodes 14a and 14b for separating ions that are subjected to a redox reaction at the time of charging and discharging.

In this case, as the active material, an electrolyte prepared by dissolving transition metals such as V, Fe, Cr, Cu, Ti, Mn, and Sn, or the like, in a strong acid aqueous solution is used.

The prepared electrolyte is not stored in cells (electrodes) 14a and 14b and is stored in external electrolyte tanks 11a and 11b in a liquid state, and is supplied into the cells (electrodes) 14a and 14b through the pumps 12a and 12b during the charging and discharging.

The used electrodes 14a and 14b are an inactive electrode. The electrode itself reacts between the surface of the electrode and the electrolyte without a chemical reaction and thus, the life span of the electrode is increased, which is differentiated from the battery according to the related art.

Since the redox flow battery has a structure in which a battery stack (output) and an electrolyte tank (capacity) can be separated from each other, the output and the capacity of the redox flow battery may be freely designed and the redox flow battery may be installed without being almost limited.

As the electrodes 14a and 14b for the redox flow battery, graphite that does not cause inconvenience to an electrolyte having good conductivity has been used in the art. When the graphite produced by burning carbon that is a carbon fiber at high temperature once more, is used as the electrode for the redox flow battery, a catholyte and an anolyte may be mixed with each other due to the permeation of the electrolyte between graphite plates.

I is necessary to install a power storage apparatus such as a battery so as to stably supply power from a power generation system using wind power, sunlight, water power, and so on. To this end, the lead storage battery has been currently used, which needs to be periodically replaced due to a short life span and has a problem in maintenance. In particular, since there is a need to treat industrial wastes generated at the time of replacing the battery, research into a redox flow battery energy storage system has been actively conducted recently.

The performance of the redox flow battery has to do with unique characteristics of components such as equivalent resistance of an electrode, an interelectrode distance, a specific surface area of fibrous activated carbon, equivalent resistance of a diaphragm (resistance component when being equivalent at a resistor, rather than resistance at the time of transmitting ions), and the like and characteristics of the electrolyte. Herein, items relating to the characteristics of the electrolyte will be described.

Since the redox flow battery is a battery in which oxidation and reduction are simultaneously performed in a cathode and an anode, even though the unique performance of components as described above is slightly poor, there is no problem in operating the components. However, when the redox flow battery does not satisfy the basic characteristics of the electrolyte, the components as the battery are deficient and thus, the redox flow battery are not operated at all.

In this case, as the requirements of the electrolyte, the catholyte needs to be a quinquevalence vanadium salt solution and the anolyte needs to be a divalence vanadium salt solution. When each ion concentration is almost equal, the electrolyte may be operated as a battery, but when the difference in ion concentration is extremely large, the electrolyte may not be properly operated.

Since the redox flow battery stores electricity in the electrolyte, the stored power is increased by increasing the electrolyte rather than increasing the number of cells. Further, since the cell and the electrolyte may be separately installed from each other, the redox flow battery may store power at low cost over a long period of time by storing the charged electrolyte in a sealed container. Since special manufacturing facilities are not needed so as to manufacture the redox flow battery, the redox flow battery may be manufactured in all the specifications from a small size (several watt) to a large size (tens of thousands kilowatt).

Since both of the cathode and the anode of the electrolyte use vanadium sulfate, even if any liquid is mixed in the electrolyte, the redox flow battery does not generate heat, nor noxious gases and thus, is safe and does not have a risk of ignition or explosion without a risk of overcharging or overdischarging.

The vanadium sulfate solution does not have acute toxicity and chronic toxicity. Therefore, when the vanadium sulfate solution touches clothing or hands, there are no cases in which the clothing is burned or the hands got burned.

Meanwhile, since a general battery is portable (transferable), there has been controversy over the performance of the battery in view of power concentration (power amount stored per unit weight). However, in the case of a large-capacity storage battery that is fixedly installed like the redox flow battery, discussing the performance of the battery in connection therewith is wrong. Therefore, there is a need to discuss on how to safely and stably store power at low cost. In this respect, there is no battery that can replace the redox flow battery in storing large power.

The performance of the redox flow battery has to do with unique characteristics of components such as equivalent resistance of an electrode, an interelectrode distance, a specific surface area of fibrous activated carbon, equivalent resistance of a diaphragm (resistance component when being equivalent at a resistor, rather than resistance at the time of transmitting ions) and characteristics of the electrolyte. Herein, items relating to the characteristics of the electrolyte will be described.

Since the redox flow battery is a battery in which oxidation and reduction are simultaneously performed in a cathode and an anode, even though the unique performance of components as described above is slightly poor, there is no problem in operating the components. However, when the redox flow battery does not satisfy the basic characteristics of the electrolyte, the components as the battery are deficient and thus, the redox flow battery are not operated at all.

In this case, as the requirements of the electrolyte, the catholyte needs to be a quinquevalence vanadium salt solution and the anolyte needs to be a divalence vanadium salt solution. When ion concentration of each liquid is almost equal, the electrolyte may be operated as a battery, but when the difference in ion concentration of each liquid is extremely large, the electrolyte may not be properly operated.

Therefore, since the electrolyte solution determines charging capacity of electricity according to the concentration and amount thereof and affects the reversibility of a chemical reaction and a dynamic state of a solution, there are problems in that a technology of controlling a valence during a process of setting the optimized concentration and preparing the electrolyte is lack and a large amount of sulfuric acid is used for stabilizing the electrolyte.

Since the electrolyte solution determines charging capacity of electricity according to the concentration and amount thereof and affects the reversibility of a chemical reaction and a dynamic state of a solution, there is problems in that a technology of controlling a valence during a process of setting the optimized concentration and preparing the electrolyte is lack.

A special redox potential meter (cyclic voltammetry) has been typically used for investigating the characteristics of the electrolyte. In order to determine the superiority of performance from data that can be acquired through understanding the concept of the redox potential meter, some electrochemical knowledge is required, such that the use of the redox potential meter is inconvenient.

Meanwhile, the selective ion densitometer is to measure the concentration of specific ions and is a kind of diagram polarograph. The polarograph, which is a potentiostat invented in Japan, is an electrolysis apparatus using a mercury electrode. The polarograph can show the number of mercury particles by reducing an electrochemical equivalent. Therefore, a meter using the principle has been manufactured until the present.

However, this type of apparatus directly uses the electrode (mercury particles) as a tested liquid, such that it may be difficult to use a solution that easily reacts with the mercury, the mercury may be mixed in the tested liquid, and the environmental pollution may be caused due to drainage.

Among others, the redox flow battery is a system that is recharged by oxidizing and reducing active materials in an electrolyte unlike a secondary battery according to the related art, which is an electrochemical storage apparatus directly storing chemical energy in an electrolyte as electric energy.

Attempts to use the redox flow battery as the charging apparatus while supplementing the disadvantages of the redox flow battery have been conducted in various industrial fields. However, these attempts have been conducted only in the specific industrial fields such as a car and have not yet been actively used in various fields.

### [Disclosure]

### [Technical Problem]

An object of the present invention is to provide a method for manufacturing an electrode for a redox flow battery and a redox flow battery having excellent electrochemical characteristics by attaching between upper and lower graphite plates while inserting a thermoplastic film between the graphite plates and applying pressure to the graphite plates using a heating roller so as to prevent a catholyte and an anolyte from being mixed with each other.

Another object of the present invention is to provide an apparatus for manufacturing an electrolyte for a redox flow battery and a method for manufacturing the same capable of easily controlling concentration of an electrolyte and an electrovalence of ion used for a redox flow battery.

Another object of the present invention is to provide a selective ion densitometer and a method for measuring ion concentration capable of measuring and determining performance of an electrolyte for a redox flow battery without a professional knowledge.

Another object of the present invention is to provide a self-redox flow battery system having excellent efficiency by using a hydraulic power generation apparatus and a redox flow battery.

### [Technical Solution]

According to an exemplary embodiment of the present invention, there is provided a method for manufacturing an electrode for a redox flow battery, including: disposing graphite plates 21 and 22 up and down so as to be spaced apart from each other and inserting a thermoplastic film 23 between the graphite plates 21 and 22; and adhering the upper and lower graphite plates 21 and 22 to the thermoplastic film 23 by heat and pressure generated by pressing the upper and lower graphites 21 and 22 using a heating roller 30.

The thermoplastic film 23 may be any one of EVA, PP, PE, and PVC and a thickness thereof may be 10 to 15 µm. A heating temperature of the heating roller 30 may be lower than a melting temperature of the thermoplastic film 23 and pressure of the heating roller 30 is 1 to 3 kgf/cm².

A redox flow battery according to an exemplary embodiment of the present invention may include an electrode manufactured described above.

According to another exemplary embodiment of the present invention, there is provided an apparatus for manufacturing an electrolyte for a redox flow battery , including: an electrolytic cell in which a cathode chamber, an undiluted liquid chamber, a treatment liquid chamber, and an anode chamber are formed; and a power supply unit supplying power to a cathode and an anode, wherein an anion transmission membrane and a cation transmission membrane are disposed between the cathode chamber and the undiluted liquid chamber, the cation transmission membrane is disposed between the undiluted liquid chamber and the treatment liquid chamber, and the anion transmission membrane and the cation transmission membrane are disposed between the treatment liquid chamber and the anode chamber.

The apparatus may further include a purifying apparatus purifying an electrolyte deteriorated or including impurities.

The cathode and the anode may be made of titanium, platinum, or an alloy of titanium and ruthenium, an anolyte and catholyte may be a sodium sulfate solution, the undiluted liquid may be a vanadium oxide sulfate solution, and the treatment liquid may be a sulfate solution.

Each of the cathode chamber, the anode chamber, the undiluted liquid chamber, and the treatment liquid chamber may be connected to an anolyte and catholyte tank, an undiluted liquid tank, and a treatment liquid tank, respectively, by a tube and each of the tubes may be connected to a circulation pump.

The tube may be further provided with a control unit so as to control a flux supplied to each chamber from the circulation pump.

The control unit may include a pressure gauge and a control valve.

According to another exemplary embodiment of the present invention, there is provided a method for manufacturing an electrolyte for a redox flow battery, including: after partitioning an anion transmission membrane and a cation transmission membrane between a cathode chamber and an undiluted liquid chamber, the cation transmission membrane between the undiluted liquid chamber and the treatment liquid chamber, and the anion transmission membrane and the cation transmission membrane between the treatment liquid chamber and the anode chamber, the cathode chamber and the anode chamber are filled with a sodium sulfate solution, the undiluted liquid chamber is filled with a vanadium oxide sulfate solution, and a treatment liquid chamber is filled with the sulfate solution, and ions move through the anion transmission membrane and the cation transmission membrane by supplying power to the cathode and the anode.

A current amount flowing in each chamber may be controlled so as to generate trivalence or tetravalence vanadium electrolyte.

The current amount may use constant current 1.1 to 1.3 times higher than a critical current value and the critical current value may be a current value, which is measured in each chamber by putting a saline solution into each chamber and applying a predetermined vo ltage to each chamber.

According to another exemplary embodiment of the present invention, there is provided a selective ion densitometer, including: a first measurement module including a potential controller and a first voltmeter measuring a potential difference between a comparative electrode and a reference electrode; a second measurement module including a load resistor and a second voltmeter measuring a potential difference between an interaction electrode and the reference electrode; an electrode unit arranged with the comparative electrode, the reference electrode, the interaction electrode and having an anolyte and catholyte filled therein, and having an ion selective transmission membrane selectively transmitting measurement target ion included in a measurement target sample formed on a bottom surface thereof; and a controller calculating concentration of the measurement target ion using a potential difference measured by the first voltmeter and the second voltmeter.

The measurement target sample may be a vanadium salt solution and the measurement target ion may be vanadium ion.

The comparative electrode and the reference electrode may be made of gold or platinum and the interaction electrode may be made of silver or lead.

The anolyte and catholyte may be 5 to 15% of acetic acid or sulfuric acid.

The ion selective transmission membrane may be made of poly tetra fluoro ethylene or polyvinyl chloride.

The controller may include an arithmetic unit calculating the concentration of the vanadium ion by comparing the potential difference measured using a standard sample and the potential difference measured using the vanadium salt solution and a display unit displaying the calculated concentration of ions, and the standard sample may be selected from at least any one of an iron (I) chloride solution, an iron (II) chloride solution, a chromium (III) chloride solution, and a vanady sulfate solution.

According to another exemplary embodiment of the present invention, there is provided a method for measuring selective ion concentration measuring concentration of measurement target ion of a sample using a standard sample of which ion concentration is known, including: sequentially contacting a reference liquid, a standard sample, and a measurement sample, respectively, to an electrode unit of a selective ion densitometer; controlling a potential controller so that each voltage displayed on voltmeters due to the contact with the reference liquid, the standard sample, and the measurement sample becomes zero; measuring ion potential by not applying current to load resistor; and operating a relationship between ion concentration and a potential of the potential controller using data in the controlling of the potential and the measuring of the ion potential.

According to another exemplary embodiment of the present invention, there is provided a self-redox flow battery system, including: a micro hydraulic power generation apparatus including a wing turbine rotating by water introduced through a conduct pipe and a DC power generator generating DC current by the rotation of the wing turbine; and a redox flow battery including a multilayer electrode in which a plurality of unit electrodes are multilayered, a first electrolyte tank and a second electrolyte tank each storing an active material in different oxidation states, and a first pump and a second pump each connected to the first and second electrolyte tanks to circulate the active materials stored in the tanks through the multilayer electrode so as to perform charging and discharging.

The micro hydraulic power generation apparatus may include a body and a DC power generator coupled with the upper portion of the body.

A portion of the outside of the body of the micro hydraulic power generation apparatus may be connected with a conduct pipe into which water is introduced and the other portion thereof may be connected with a drain pipe from which water is discharged, the inside of the body may be provided with a wing turbine, and the drain pipe may be branched in plural and nozzles installed at the ends of each branched conduct pipe may be connected to the outside of the body so as to penetrate therethrough and water penetrating through the nozzle may rotate the wing turbine.

The micro hydraulic power generation apparatus may be provided by mounting the wing turbine on a power generator for a compact car.

The unit electrode may include two graphite plates and a thermoplastic film inserted between the graphite plates.

The thermoplastic film may be made of a material that suppresses a formation of pin holes and suppresses permeation of the electrolyte and a thickness thereof may be 10 to 15 µm.

The thermoplastic film may be made of one or two or more mixtures or compounds of thermoplastic resin mixtures of polystyrene, polyethylene, polypropylene, polyethylene terephthalate, polyvinyl chloride, polycarbonate, polyvinylidene chloride, acetal, chimei, nylon, artificial rubber, synthetic rubber, ethylene, and vinyl acetate.

### [Advantageous Effects]

As set forth above, the exemplary embodiment of the present invention can implement the excellent electrochemical characteristics and the excellent economic efficiency by attaching between the upper and lower graphite plates while inserting the thermoplastic film between the graphite plates and applying pressure to the graphite plates using the heating roller so as to prevent the catholyte and the anolyte from being mixed with each other.

The apparatus for manufacturing an electrolyte for a redox flow battery and the method for manufacturing the same according to the exemplary embodiment of the present invention can efficiently control the concentration of the electrolyte and the electrovalence of ion.

The apparatus for manufacturing an electrolyte for a redox flow battery and the method for manufacturing the same according to the exemplary embodiment of the present invention can implement the excellent charging efficiency due to the high density and the excellent economic efficiency and stability due to the thermal and chemical stability.

The exemplary embodiment of the present invention is to provide the apparatus for manufacturing an electrolyte for a redox flow battery and the method for manufacturing the same capable of recycling the electrolyte that is deteriorated by the use or including impurities.

The apparatus for manufacturing an electrolyte for a redox flow battery and the method for manufacturing the same according to the exemplary embodiment of the present invention can recycle a new regeneration liquid and the electrolyte having the reduced charging efficiency due to the use.

The selective ion densitometer and the method for measuring ion concentration according to the exemplary embodiment of the present invention having the above-mentioned configuration can efficiently measure the concentration of the electrolyte for the redox flow battery and the electrovalence of ion without the electrochemical knowledge.

The selective ion densitometer and the method for measuring ion concentration according to the exemplary embodiment of the present invention can prevent the water pollution because the mercury is not included in the tested liquid.

The selective ion densitometer and the method for measuring ion concentration according to the exemplary embodiment of the present invention can implement the accurate measurement and can be simply used.

The self-redox flow battery system according to the exemplary embodiment of the present invention can be built to have the excellent efficiency by using a small self-hydraulic power generation apparatus and the redox flow battery. Therefore, the electronic devices can be used within the fixed limit without the supply of power.

### [Description of Drawings]

FIG. 1 is a basic structure view of a general redox flow battery;
FIGS. 2A and 2B are diagrams showing a process of manufacturing an electrode for a redox flow battery according to an exemplary embodiment of the present invention;
FIG. 3 is a perspective view showing the exemplary embodiment of the apparatus for manufacturing an electrolyte for a redox flow battery according to the exemplary embodiment of the present invention;
FIG. 4 is an explanation diagram showing the apparatus for manufacturing an electrolyte for a redox flow battery and a method for manufacturing the same according to the exemplary embodiment of the present invention;
FIG. 5 is a graph showing voltage/current characteristics of the apparatus for manufacturing an electrolyte for a redox flow battery according to the exemplary embodiment of the present invention;
FIG. 6 is an explanation diagram showing an apparatus for manufacturing an electrolyte for a redox flow battery and a method for manufacturing the same according to another exemplary embodiment of the present invention;
FIG. 7 is a graph showing voltage/current characteristics of a purifying apparatus of the apparatus for manufacturing an electrolyte for a redox flow battery and the method for manufacturing the same according to the exemplary embodiment of the present invention;
FIGS. 8A and 8B are explanation diagrams showing a selective ion densitometer and a method for measuring ion concentration according to an exemplary embodiment of the present invention;
FIG. 9 is a circuit diagram showing an equivalent circuit of the selective ion densitometer and the method for measuring ion concentration according to an exemplary embodiment of the present invention;
FIG. 10 is a graph showing a relationship between the ion concentration and potential adjustment voltage in the selective ion densitometer and the method for measuring ion concentration according to the exemplary embodiment of the present invention;
FIG. 11 is a schematic diagram of a self-redox flow battery system according to an exemplary embodiment of the present invention;
FIG. 12 is a schematic diagram of a hydraulic power generation apparatus for explaining a principle of power generation according to an exemplary embodiment of the present invention; and
FIG. 13 is a diagram showing a structure of a unit electrode included in a multilayer electrode according to an exemplary embodiment of the present invention.

### [Best Mode]

Hereinafter, a configuration and an effect of exemplary embodiments of the present invention will be described with reference to the accompanying drawings.

The same or like components of the exemplary embodiments of the present invention are denoted by the same or like components and the detailed description thereof will be omitted.

FIGS. 2A and 2B are diagrams showing a process of manufacturing an electrode for a redox flow battery according to an exemplary embodiment of the present invention.

First, as shown in FIG. 2A, graphite plates 21 and 22 are disposed up and down so as to be spaced apart from each other and a thermoplastic film 23 is inserted between the graphite plates 21 and 22.

In this configuration, the thermoplastic film 23 is made of a material that does not permeate into an electrolyte and is not provided with pin holes and uses an ultra-thin thermoplastic film.

For example, when the thermoplastic film 23 is softened by heating, the thermoplastic film 23 is a film that flows, is deformed, and solidified when force is applied to the softened thermoplastic film 23 but can be repeatedly used by being softened by reheating. An example of the thermoplastic film 23 may include ethylenevinyl acetate copolymer (EVA), polypropylene (PP), polyethylene (PE), polyvinylchloride (PVC), etc., and a thickness of the thermoplastic film 23 may be in the range of 10 to 15 µm.

Next, as shown in FIG. 2B, the graphite plates 21 and 22 are vertically pressed by a heating roller 30 so as to face each other, such that the upper and lower graphite plates 21 and 22 are adhered to the thermoplastic film 23.

In this case, a heating temperature of the heating roller 30 is set to be slightly lower than a melting temperature of the thermoplastic film 23 and pressure of the heating roller 30 is set to be about 1 to 3 kgf/cm².

Thereby, the thermoplastic film 23 is compressed to the upper and lower graphite plates 21 and 22.

By the method, the thermoplastic film 23 inserted between the upper and lower graphite plates 21 and 22 are partially damaged by heat and pressure, such that the upper and lower graphite plates are carbon-bonded to each other so as to be conducted to each other. However, the other portions are insulated (for example, compressed) by the thermoplastic film 23 so as to prevent the electrolyte from permeating into the graphite plates 21 and 22.

That is, according to the exemplary embodiment of the present invention, the graphite plates 21 and 22 that do not cause inconvenience to an electrolyte having good conductive performance is manufactured to be appropriate for the electrode 20 for the redox flow battery, thereby obtaining an electrode having an excellent electrochemical characteristics and economic efficiency.

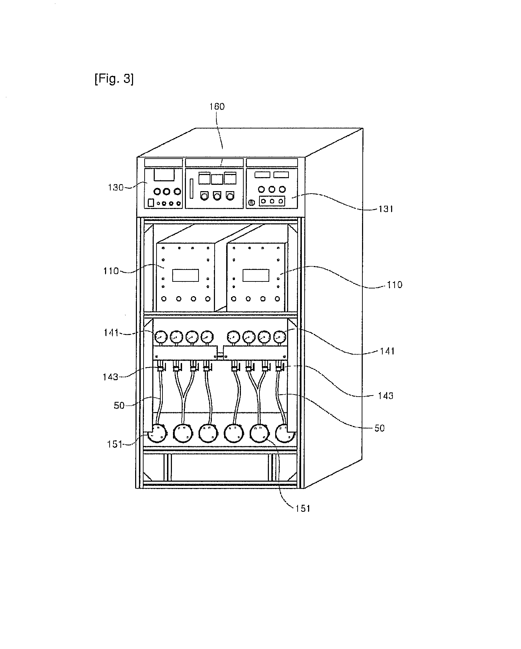

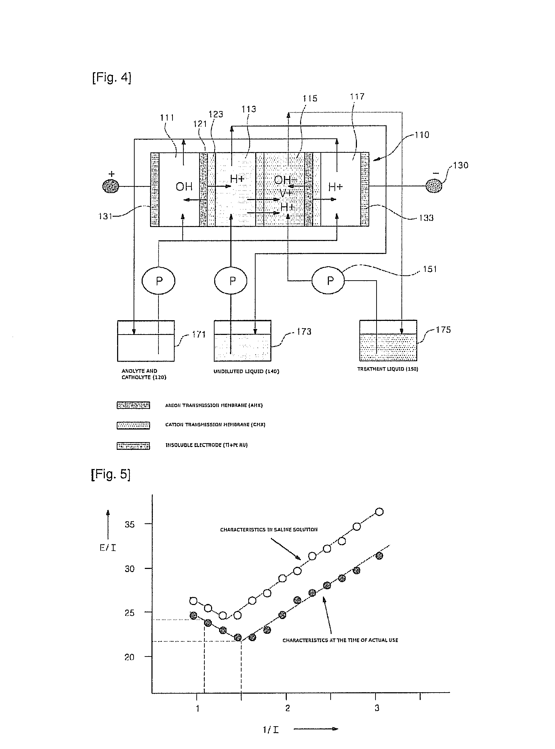

FIG. 3 is a perspective view showing the apparatus for manufacturing an electrolyte for a redox flow battery according to the exemplary embodiment of the present invention and FIG. 4 is an explanation diagram showing the apparatus for manufacturing an electrolyte for a redox flow battery and a method for manufacturing the same according to the exemplary embodiment of the present invention. As shown in FIGS. 3 and 4, the apparatus for manufacturing an electrolyte for a redox flow battery according to the exemplary embodiment of the present invention includes an electrolytic cell 110 in which a cathode chamber 111, an undiluted liquid chamber 113, a treatment liquid chamber 115, and an anode chamber 117 are formed; and a power supply unit 130 supplying power to a cathode 131 and an anode 133, wherein an anion transmission membrane 121 and a cation transmission membrane 123 are disposed between the cathode chamber 111 and the undiluted liquid chamber 113, the cation transmission membrane 123 is disposed between the undiluted liquid chamber 113 and the treatment liquid chamber 115, and the anion transmission membrane 121 and the cation transmission membrane 123 are disposed between the treatment liquid chamber 115 and the anode chamber 117.

The cathode 131 and the anode 133 are made of titanium, platinum, or an alloy of titanium and ruthenium. An anolyte and catholyte 120 may be a sodium sulfate solution, the undiluted liquid 140 may be a vanadium oxide sulfate solution, and the treatment solution 150 may be a sulfate solution.

Each of the cathode chamber 111, the anode chamber 117, the undiluted liquid chamber 113, and the treatment liquid chamber 115 may be connected to an anolyte and catholyte tank 171, an undiluted liquid tank 173, and a treatment liquid tank 175, respectively, by a tube 50 and each of the tubes 50 may be connected to a circulation pump 151. Each chamber and each tank are connected with each other by a tube (hose or pipe) to have a structure capable of circulating the anolyte and catholyte, the undiluted liquid, and the treatment liquid.

A material in the ion transmission membrane of ion materials generated during the circulation process moves to the undiluted liquid chamber 113 by transmitting hydrogen ions (H⁺) through the anion transmission membrane 121 and the cation transmission membrane 123 in the cathode chamber 111.

That is, when positive voltage is applied to the cathode 131 and negative voltage is applied to the anode 133, electric field is formed and the ion materials move through the ion transmission membranes 121 and 123 by the electric field.

Ion materials (H⁺, V⁺, etc.) having positive polarity move to the anode 133 to which the negative voltage is applied and an ion material (OH⁻) having negative polarity moves to the cathode 131 to which the positive voltage is applied.

An output from the circulation pump 151 may be adjusted so that the pressures introduced into the electrolytic cell 110 from each tank are the same by operating the circulation pump 151. In the apparatus for manufacturing an electrolyte for a redox flow battery, the circulation pump 151 is operated in an area slightly beyond a critical current.

The tube 50 may further include a control unit that controls a flux supplied to each chamber 111, 113, and 115 from the circulation pump 151.

The control unit includes a pressure gauge 141 and a control valve 143. Meanwhile, a controller 60 capable of controlling the control unit or performing an automatic control according to predetermined data may be installed.

After sequentially partitioning the anion transmission membrane 121 and the cation transmission membrane 123 between the cathode chamber 111 and the undiluted liquid chamber 113, the cation transmission membrane 123 between the undiluted liquid chamber 113 and the treatment liquid chamber 115, and the anion transmission membrane 121 and the cation transmission membrane 123 between the treatment liquid chamber 115 and the anode chamber 117, the cathode chamber 111 and the anode chamber 117 are filled with the sodium sulfate solution, the undiluted liquid chamber 113 is filled with the vanadium oxide sulfate solution (VOSO₄), and the treatment liquid chamber 115 is filled with the sulfate solution. In this case, ions may move through the anion transmission membrane 121 and the cation transmission membrane 123 by supplying power to the cathode 131 and the anode 133.

A current amount flowing in each chamber 111, 113, and 115 may be controlled so as to generate a trivalence or tetravalence vanadium electrolyte.

When the vanadium oxide sulfate solution (VOSO₄) is used in the undiluted liquid, oxygen ion (O⁻²) is combined with hydrogen ion (H⁺) by coming from the anolyte and catholyte, such that some of the oxygen ion (O⁻²) become water (H₂O) and the other of the oxygen ion (O⁻² ) become oxygen (O₂), In this case, dissociated vanadium ions (V⁺³ or V⁺⁴) are diffused into the treatment liquid chamber 115.

Meanwhile, sulfate ion (SO₄⁻²) is combined with the hydrogen ion supplied from the anolyte and catholyte so as to be into sulfuric acid (H₂SO₄).

The current amount is a constant current 1.1 to 1.3 times higher than a critical current value. Herein, the critical current value may be a current value that is measured in each chamber by putting a saline solution in each chamber 111, 113, and 115 and applying a predetermined voltage thereto.

In other words, products generated by electrically decomposing the undiluted liquid 140 are purified and separated via the ion transmission membranes 121 and 123, such that the operating point is set as described above.

FIG. 6 is an explanation diagram showing an apparatus for manufacturing an electrolyte and a method for manufacturing the same according to another exemplary embodiment of the present invention. As shown in FIG. 3 or FIG. 6, a purifying apparatus may be further provided so as to purify a raw material of which the purity is poor due to the deterioration thereof or impurities included therein.

The differences between the purifying apparatus and the apparatus for manufacturing an electrolyte are as follows.

A by-product liquid chamber 125 is further provided between the cathode chamber 111 and the undiluted liquid chamber 140 and a by-product liquid tank 172 is connected to the tube 50.

The circulation process of the by-product liquid 120 is that the circulation pump 151 is provided in the tube 50, such that the by-product liquid 120 moves from the by-product liquid tank 172 to the by-product liquid chamber 112 and then, again returns the by-product liquid tank 172.

The anion transmission membrane 121 is disposed between the by-product liquid chamber 120 and the undiluted liquid chamber 140.

The purifying apparatus mainly uses the electrolyte of which the undiluted liquid is deteriorated or the undiluted liquid of which the purity is relatively poor.

For example, when the sodium sulfate solution (Na₂SO₄) is used as the anolyte and catholyte 120, ammonium metavanadate (NH₄VO₃) is used as the undiluted liquid 140, and diluted sulfuric acid is used as the treatment liquid, ammonium ion (NH₄⁺) moves to the by-product liquid so as to be into ammonium water and vanadium ion moves to the treatment liquid so as to be into the vanadium sulfate solution.

When the vanadium oxide sulfate (VOSO₄) solution is used as the undiluted liquid and the diluted sulfuric acid is used as the treatment liquid, the sulfate ion of the undiluted liquid moves to the by-product liquid so as to be into the sulfuric acid and the vanadium ion moves to the treatment liquid so as to be into the vanadium sulfate.

The purifying apparatus can appropriately perform purification with high purification even though impurities such as organic acid, etc. are mixed, so as to decompose salt into acid and alkali and then, combine the acid and the alkali again. A method for controlling the purifying apparatus measures a critical current like the apparatus for manufacturing an electrolyte and is operated at a current (increase of 10 to 20%) slightly beyond the critical current.

Hereinafter, the apparatus for manufacturing an electrolyte for a redox flow battery and a method for manufacturing the same according to the exemplary embodiment of the present invention will be described in more detail with reference to Examples.

### <Example 1>

### 1. Control of Apparatus for Manufacturing Electrolyte for Redox Flow Battery Using Saline Solution

The apparatus for manufacturing an electrolyte for a redox flow battery is manufactured to measure the critical current.

The current flowing in the apparatus is measured by putting 3% of the saline solution in each tank 171, 173, and 175 and applying voltage thereto.

FIG. 5 is a graph showing voltage/current characteristics of the apparatus for manufacturing an electrolyte for a redox flow battery according to the exemplary embodiment of the present invention. As shown in FIG. 5, in terms of the voltage/current characteristics of the apparatus for manufacturing an electrolyte, a vertical axis shows a numerical value (E/I) that subtracts voltage from current and a horizontal axis is marked with graduations so as to show a reciprocal number (1/1) of current.

A constant voltage and a constant current power supply are used as a power supply, which may be controlled to have tolerance of about 0.1V from peak output 30 (V) and may be enough to use output current of a maximum of 3A.

Negative resistance is generated at about 1.3 of a current axis in the saline solution, which shows that the saline solution is electrolyzed by current supplied without a sodium ion amount diffused from the membrane reaching the ion amount drawn to the outside. In this example, since a point generating the negative resistance is 1.1 to 1.3, the critical current becomes a reciprocal number (1/1.3 to 1/1.1) thereof and is 0.77 to 0.91 (A).

In this case, the negative resistance means that the gradient of the voltage/current characteristics becomes negative when voltage applied to loads is changed and voltage drop is increased when current is reduced. The negative resistance is also referred to as negative characteristic.

### 2. Performance Test of Apparatus for Manufacturing Electrolyte for Redox Flow Battery

Next, the critical current was measured in a case in which the apparatus for manufacturing an electrolyte for a redox flow battery is actually used.

The inside of the apparatus was sufficiently cleaned using pure water by discarding the saline solution of each tank and then, 10% of the sodium sulfate was injected into the anolyte and catholyte tank 171, 10% of vanadium oxide sulfate solution was injected into the undiluted liquid tank 173, and 10% of the sulfate solution was injected into the treatment liquid tank 175.

Each liquid 120, 140, and 150 was injected into the electrolytic cell by operating the circulation pump 151, but in this case, the output from the circulation pump 151 was controlled so that the injection pressure at each tank is the same. Further, the output from the circulation pump was controlled by the control valve 143 so that the flux of liquid injected from the electrolytic cell is the same. In the apparatus, the injection pressure was set to be 0.02 (MPa) and the flux was set to be 2.5 (L/min).

As shown in FIG. 5, the critical current became low due to the high battery conductivity of the solution and the circulation of liquid at the time of the actual use, such that the 1/I becomes about 0.67 (A).

The numerical value of current was irregularly shown in the negative resistance area, which is due to fluctuation in a circulation amount of liquid.

When oxygen and hydrogen that are gases generated in the electrolytic cell are emitted to the outside of the tank, the flux was changed and thus, the diffusion amount of ion at the membrane was changed. As a result, the linearity was good and the variable range of current was wide.

In a general electrodialysis, the apparatus for manufacturing an electrolyte for a redox flow battery was used at the critical current or less, but in the electrodialysis of the present invention, the apparatus for manufacturing an electrolyte for a redox flow battery used a numerical value (generally, increase of 20 to 25%) slightly beyond the critical current as conduction current. In the apparatus for manufacturing an electrolyte for a redox flow battery, in the case of generating the tetravalence vanadium ion, the critical current became 0.8(A) that is increased to 20% and in the case of generating the trivalence vanadium ion, the critical current became 0.87 (A) that is increased to 30%.

The supply voltage in the case where the critical current is 0.67(A) was 14.74 (V) and the supply voltage in the case where the critical current is 0.8 (A) that is increased to 20% was 19.2 (V), and the supply voltage in the case where the critical current is 0.87 (V) that is increased to 30% was 21.75 (V).

Even though the treatment amount was changed depending on the concentration of the undulated liquid, the circulation amount, the conductive current, etc., the treatment performance generally shown 2.5 L/h when the concentration is 10%, the circulation amount is 2.5 L/min, the supply voltage is 19.2 (V), and the electrolytic current is 0.8 (A).

### 3. Conclusion

Like the above-mentioned experiment, the apparatus for manufacturing an electrolyte for a redox flow battery according to the present invention was the electrodialysis apparatus that separates and purifies the products generated by electrolyzing the raw materials, but can control the valence of the materials (transition metal element, or the like) that are separated and purified by performing the electrolysis in the current area slightly beyond the critical current of the membrane. As a result, the apparatus for manufacturing an electrolyte for a redox flow battery serves as a coordination shifting apparatus. Since the redox flow battery used the tetravalence as the catholyte and the trivalence vanadium solution as the anolyte, the apparatus capable of controlling the valence is advantageous in the above-mentioned working.

### <Example 2>

The undiluted liquid 140 used a material that doubly transmits the used electrolyte in a cartridge filter having 20 µm and controlled the contents of vanadium to 10%. The by-product liquid tank 172 was injected with the pure water, the treatment liquid tank 175 was injected with 10% of sulfuric acid, and 10% of the sodium sulfate solution was used as the electrolyte.

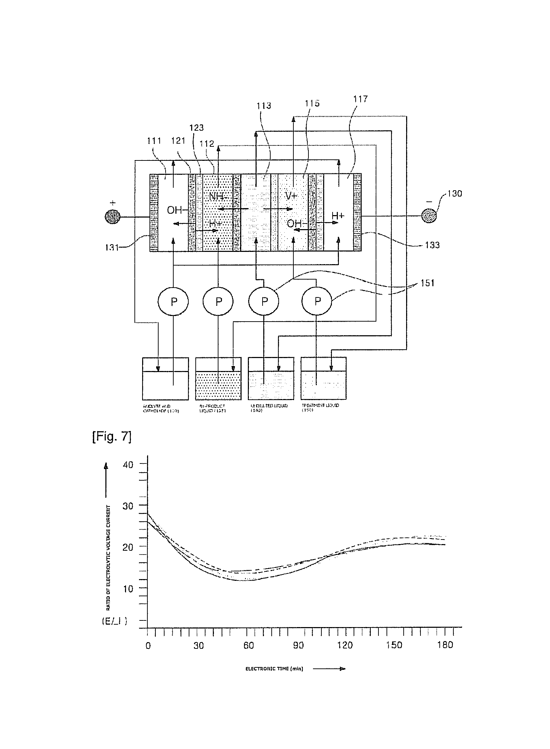

FIG. 7 is a graph showing voltage/current characteristics of a purifying apparatus of the apparatus for manufacturing an electrolyte for a redox flow battery and the method for manufacturing the same according to the exemplary embodiment of the present invention.

Under the above-mentioned conditions, the critical current was 0.72 (A). The experiment was performed four times to measure the voltage current per ten minutes by performing the electrolysis for 180 minutes as the initial conduction current is increased 5% larger (one-dot chain line), 10% larger (broken line), 15% larger (solid line), and 20% larger (dotted line) than the critical current. Further, the contents of vanadium of the treatment liquid per 30 minutes were measured by colorimetry.

As a result, the concentration of vanadium in the treatment liquid reached 8.8% in the electrolysis for 150 minutes and 9.2% for 180 minutes.

When comparing the concentration of vanadium in the treatment liquid with the voltage/current characteristics, it can be appreciated that the movement amount of vanadium ion is significantly reduced around a portion (150 minutes) when the change in current stops downwardly and maintains approximately the balance state at 180 minutes.

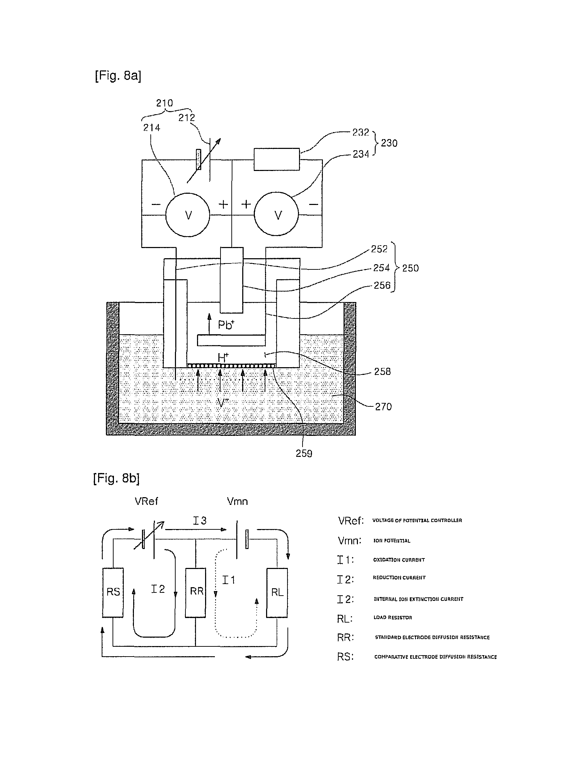

FIGS. 8A and 8B are explanation diagrams showing a selective ion densitometer and a method for measuring ion concentration according to an exemplary embodiment of the present invention. As shown in FIG. 8, the selective ion densitometer includes: a first measurement module 210 including a potential controller 212 and a first voltmeter 214 measuring a potential difference between a comparative electrode 252 and a reference electrode 254; a second measurement module 230 including a load resistor 232 and a second voltmeter 234 measuring a potential difference between an interaction electrode 256 and the reference electrode 254; an electrode unit 250 arranged with the comparative electrode 252, the reference electrode 254, the interaction electrode 256, having an anolyte and catholyte 258 filled therein, and having an ion selective transmission membrane 259 selectively transmitting a measurement target ion included in a measurement target sample 270 formed on a bottom surface thereof; and a controller calculating concentration of the measurement target ion using a potential difference measured by the first voltmeter 214 and the second voltmeter 234.

The measurement target sample 270 is the vanadium salt solution and the measurement target ion is the vanadium ion.

The comparative electrode 252 and the reference electrode 254 may be made of gold or platinum that has excellent conductivity while being electrochemically stabilized and the interaction electrode 256 may be made of silver or lead as an electrode which is subjected to oxidation and reduction due to ions.

The anolyte and catholyte 258 may be 5 to 15 % of acetic acid or sulfuric acid.

The ion selective transmission membrane 259 may be made of a teflon film or a polyvinyl chloride (PVC) that are physically and chemically stabilized poly tetra fluoro ethylene (PTFE).

The controller includes an arithmetic unit calculating the concentration of the vanadium ion by comparing the potential difference measured using a standard sample and the potential difference measured using the vanadium salt solution and a display unit displaying the calculated concentration of ions. The standard sample may be selected from any one of an iron (I) chloride solution, an iron (II) chloride solution, a chromium (III) chloride solution, and a vanady sulfate solution.

The arithmetic unit may include a storage unit that stores the existing data such as the measured potential (voltages displayed on the first or second voltmeters) values, expressions, or the like, and an operation unit that calculates concentration of the measurement target ion using the measured data.

In order to obtain the final ion concentration, the relationship expression between the ion concentration and the potential of the potential controller is obtained by inputting the data of the standard sample configured of ions of which the concentration is previously known and using the same and the concentration of the measurement target ion included in the measurement target sample is calculated and displayed using the relationship expression.

The method of measuring the selective ion concentration measuring the concentration of the measurement target ion of the sample using the previously known standard sample includes sequentially contacting a reference liquid, a standard sample, and the measurement target sample 270, respectively, to the electrode unit 250 of the selective ion densitometer; controlling the potential controller 212 so that each voltage displayed on the voltmeters 214 and 234 due to the contact with the reference liquid, the standard sample, and the measurement target sample 270 becomes zero; measuring ion potential by not applying current to the load resistor 232; and operating the relationship between the ion concentration and the potential of the potential controller using the data in the controlling of the potential and the measuring of the ion potential.

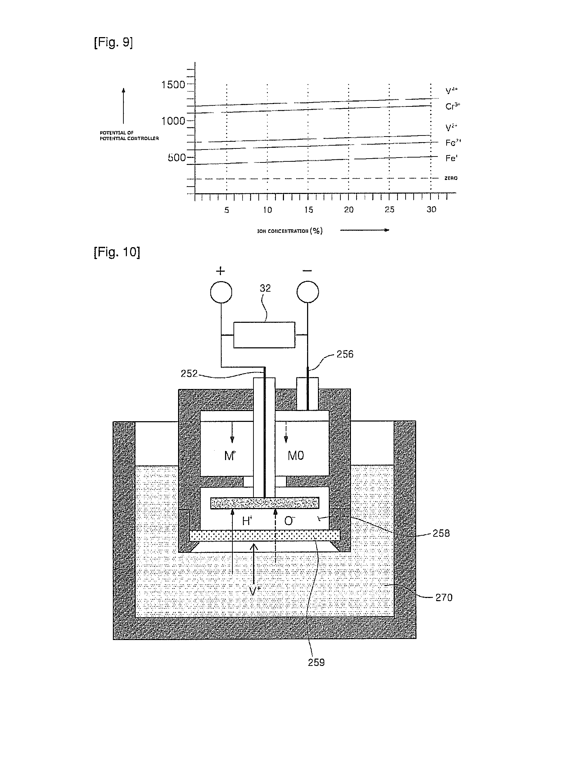

FIG. 9 is a circuit diagram showing an equivalent circuit of the selective ion densitometer and the method for measuring ion concentration according to an exemplary embodiment of the present invention. As shown in FIG. 9, the selective ion densitometer measures the potential difference between the comparative electrode 252 and the interaction electrode 256.

The reverse voltage of the oxidation potential that is the potential of the interaction electrode 256 generated through the ion selective transmission membrane 259 is applied to the comparative electrode 252, such that the potential of the potential controller is equivalent to the ion potential of the tested liquid as a result of reducing the ions generated in the selective ion densitometer.

That is, the output voltage from the potential controller 212 corresponds to the ion potential when current does not flow in the load resistor 232, such that the ion potential of the tested liquid can be appreciated when each potential is measured according to the standard reagent.

Hereinafter, the selective ion densitometer and the method for measuring ion concentration according to the exemplary embodiment of the present invention will be described in more detail with reference to Examples.

### <Example 1>

First, a method of calibration (potential controlling) the selective ion densitometer by the commercial reagent will be described.
(1) When the selective ion densitometer is in the air, the interaction electrode 56 is negative (-) and the reference electrode 254 is positive (+) inside the selective ion densitometer. Therefore, a tip of the voltmeter is biased to the positive (+).
(2) Since there is no potential difference with the sample 270 without the surface of the comparative electrode 252 being polluted, the selective ion densitometer is subjected to the zero adjustment by permeating into 10% of the diluted sulfuric acid that is the reference liquid. That is, the tip of the voltmeter is controlled to indicate the zero. In this case, about 200 mV that is the potential of the potential controller becomes the zero potential.
(3) After the selective ion densitometer is drawn out from the reference liquid, and cleaned, and moisture is removed, the selective ion densitometer is permeated into 10% of the iron (I) chloride. In this case, the voltmeter is swayed at the negative side so as to perform the potential control, such that the vibration of the voltmeter becomes zero. In this case, 400 mV that is the potential of the potential controller is the iron ion potential (VFe⁺).
(4) In the above-mentioned manner, the voltmeter is controlled to be zero by permeating into 10% of the iron (II) chloride solution. In this case, about 600 mV that is the potential of the potential controller becomes the ferrous iron ion potential (VFe²⁺).
(5) In the above-mentioned manner, about 1,100 mV that is the potential of the potential controller becomes the trivalence chromium ion potential (VCr³⁺) when permeating into 10% of the softening trivalent chromium.
(6) In the above-mentioned manner, a process of making about 1,200 mV that is the potential of the potential controller when permeating into 10% of the vanady sulfate solution into tetravalence vanadium ion (VV⁴⁺) potential is performed.

After obtaining the potential of the potential controller according to each sample through the above-mentioned process, the ion potential is obtained.

The ion potential corresponds to the ion potential of the output voltage of the voltage controller when current does not flow in the load resistor, which can be appreciated by measuring the potential of the standard sample.

FIG. 10 is a graph showing a relationship between the ion concentration and potential adjustment voltage in the selective ion densitometer and the method for measuring ion concentration according to the exemplary embodiment of the present invention. As shown in FIG. 10, the relationship between the ion concentration and the potential of the potential controller establishes the approximately linearly changing relationship when each reference potential becomes zero, thereby obtaining the concentration of the measurement target ion.

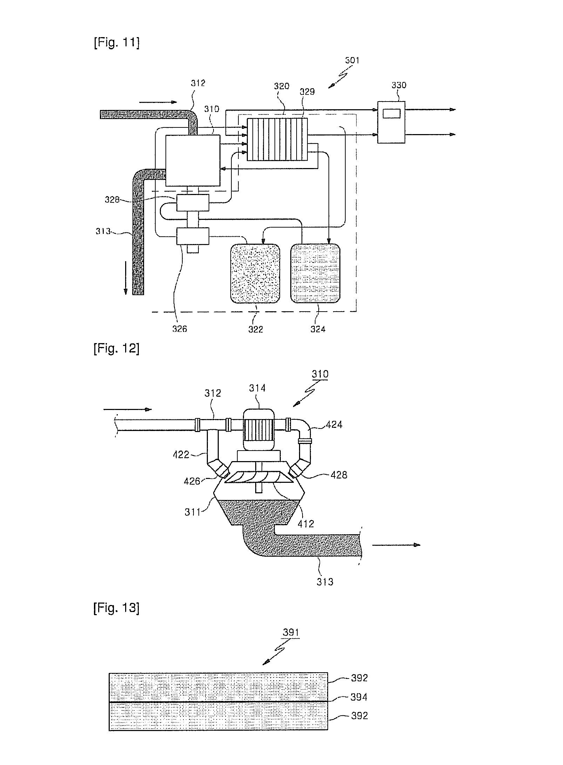

FIG. 11 is a schematic diagram of a self-redox flow battery system according to an exemplary embodiment of the present invention. A self-redox flow battery system 301 according to the exemplary embodiment of the present invention may include a hydraulic power generation apparatus 310, a redox flow battery 10, and an inverter 330. The power charged in the redox flow battery 10 is transformed through the inverter 330 and is supplied to electronic devices.

The hydraulic power generation apparatus 310 may be configured of a body 311 and a DC power generator 314 that is disposed on the upper portion of the body 311, as shown in FIG. 2. The inside of the body 311 is provided with a wing turbine 312 and the outside of the body 311 is connected with a conduct pipe 312 into which water is introduced and a drain pipe 313 from which water is discharged. In this configuration, the hydraulic power generation apparatus 310 use a power generator for a compact car as the DC power generator 314 and may be manufactured by mounting the wing turbine 312 on the rotation shaft of the power generator for the compact car.

As described above, the hydraulic power generation apparatus 310 according to the exemplary embodiment of the present invention has advantages in terms of the manufacturing cost and the environmental aspect because the dedicated power generator needs not to be separately manufactured.

The conduct pipe 312 is branched into several sections and is connected with a nozzle (not shown) installed in the body 311. Water introduced through branch pipes 322 and 324 branched into several sections is sprayed into the wing turbine 312 through nozzles 426 and 428 to rotate the wing turbine 312. The wing turbine 312 is combined with a rotator (not shown) of the DC power generator 314 so as to transfer a rotation force to the DC power generator 314.

In the exemplary embodiment of the present invention, the number of nozzles 326 and 328 may be provided in four. The number of nozzles 326 and 328 may be variously provided according to the structure of the conduct pipe 312 and the body 311.

The drain pipe 313 performs a function of draining water introduced by the conduct pipe 312 and the size of the drain pipe 313 may be determined in consideration of the amount of water accumulated in the body 311 by being colliding with the wing turbine 312. This is not to hinder the rotation of the wing turbine 312 by the amount of water accumulated in the body 311.

A redox flow battery 320 is configured to include a first electrolyte tank 322, a second electrolyte tank 324, a first pump 326, a second pump 328, and a multilayer electrode 329.

The first electrolyte tank 322 and the second electrolyte tank 324 store the active material having the different oxidation state. The first pump 326 and the second pump 328 are connected with the first electrolyte tank 322 and the second electrolyte tank 324, respectively, to perform the function of circulating the active material at the time of charging and discharging. The multilayer electrode 329 is connected with a plurality of unit electrodes 391 and each of the unit electrodes 391 is configured to include the cathode and the anode electrodes separated by the ion exchange membrane (membrane).

In this configuration, the ion exchange membrane (membrane) is disposed between the cathode and the anode electrodes so as to separate the ions that are subjected to the redox reaction at the time of charging and discharging. In this case, the active material is an electrolyte produced by dissolving transition metals such as V, Fe, Cr, Cu, Ti, Mn, Sn, and so on, in a strong acid aqueous solution.

The electrolyte is not stored in the multilayer electrode 329 and is stored in the first and second electrolyte tanks 322 and 324 in a liquid state and is supplied into the multilayer electrode 329 through the first and second pumps 326 and 328 during the charging and discharging.

The unit electrode 391 configuring the multilayer electrode 329 according to the exemplary embodiment of the present invention is an inactive electrode. The electrode itself reacts between the surface of the electrode and the electrolyte without a chemical reaction and thus, the life span of thereof is longer than the secondary battery according to the related art.

The redox flow battery 10 according to the exemplary embodiment of the present invention may freely design the output and the capacity because the multilayer electrode 329 determining the output and the first and second electrolyte tanks 322 and 324 storing the electrolyte determining the charging capacity are separated from each other and may be easily installed due to the small restriction in terms of the installation place.

Hereinafter, the unit electrode 391 configuring the multilayer electrode 329 according to the exemplary embodiment of the present invention will be described in more detail with reference to FIG. 3. As shown in FIG. 3, the unit electrode 391 may include two graphite plates 392 and a thermoplastic film 394 inserted between both graphite plates 392.

The thermoplastic film 394 is made of a material that does not permeate into an electrolyte and is not provided with pin holes and is in an ultra-thin film. For example, when the thermoplastic film 394 is softened by heating, the thermoplastic film 23 is a film that flows, and is deformed and solidified when force is applied to the softened thermoplastic film 23, but can be repeatedly used by being softened by reheating. The thermoplastic film 394 may be made of a thermoplastic resin copolymer of polystyrene, polyethylene, polyethylene terephthalate, polyvinyl chloride, polycarbonate, polyvinylidene chloride (PVC), acetal, chimei, nylon, polypropylene, ethylene, and vinyl acetate or a commercial mixture thereof, or the like. Further, the thermoplastic film 394 may be made of artificial rubber, synthetic rubber, or a mixture of rubber and thermoplastic resin or a compound, or the like.

The thickness of the thermoplastic film 394 may be provided in the range of approximately 10 to 15 µm. The thickness may be changed according to the usage of the multilayer electrode 329.

The thermoplastic films 394 inserted between both of the graphite plates 392 are electrically conducted to each other by the carbon bond and the other portions are insulated by the thermoplastic film 394. By this, the electrolyte is prevented from permeating into both of the graphite plates 392.

As described above, the multilayer electrode 329 according to the exemplary embodiment of the present invention uses the graphite plate 392 having the good reactivity with the electrolyte while having the good conductivity, such that the multilayer electrode 320 may have the electrochemically excellent performance.

Although exemplary embodiments of the present invention have been illustrated and described, the present invention is not limited to the above-mentioned embodiments and various modified embodiments can be available by those skilled in the art without the scope of the appended claims of the present invention. Further, these modified embodiments should not be appreciated separately from technical spirits or prospects.

## Claims

1. A method for manufacturing an electrode for a redox flow battery, comprising:
disposing graphite plates 21 and 22 up and down so as to be spaced apart from each other and inserting a thermoplastic film 23 between the graphite plates 21 and 22; and
adhering the upper and lower graphite plates 21 and 22 to the thermoplastic film 23 by heat and pressure generated by pressing the upper and lower graphite plates 21 and 22 using a heating roller 30.

2. The method of claim 1, wherein the thermoplastic film 23 is any one of EVA, PP, PE, and PVC and a thickness thereof is 10 to 15 µm.

3. The method of claim 1, wherein a heating temperature of the heating roller 30 is lower than a melting temperature of the thermoplastic film 23 and a pressure of the heating roller 30 is 1 to 3 kgf/cm².

4. A redox flow battery including an electrode 20 manufactured according to any one of claims 1 to 3.

5. An apparatus for manufacturing an electrolyte for a redox flow battery, comprising:
an electrolytic cell in which a cathode chamber, an undiluted liquid chamber, a treatment liquid chamber, and an anode chamber are formed; and
a power supply unit supplying power to a cathode and an anode,
wherein an anion transmission membrane and a cation transmission membrane are disposed between the cathode chamber and the undiluted liquid chamber, the cation transmission membrane is disposed between the undiluted liquid chamber and the treatment liquid chamber, and the anion transmission membrane and the cation transmission membrane are disposed between the treatment liquid chamber and the anode chamber.

6. The apparatus of claim 5, further comprising a purifying apparatus purifying an electrolyte deteriorated or including impurities.

7. The apparatus of claim 5, wherein the cathode and the anode are made of titanium, platinum, or an alloy of titanium and ruthenium, an anolyte and catholyte is a sodium sulfate solution, the undiluted liquid is a vanadium oxide sulfate solution, and the treatment liquid is a sulfate solution.

8. The apparatus of claim 5, wherein each of the cathode chamber, the anode chamber, the undiluted liquid chamber, and the treatment liquid chamber is connected to an anolyte and catholyte tank, an undiluted liquid tank, and a treatment liquid tank, respectively, by a tube and each of the tubes is connected to a circulation pump.

9. The apparatus of claim 8, wherein the tube is further provided with a control unit so as to control a flux supplied to each chamber from the circulation pump.

10. The apparatus of claim 9, wherein the control unit includes a pressure gauge and a control valve.

11. A method for manufacturing an electrolyte, wherein:
after partitioning an anion transmission membrane and a cation transmission membrane between a cathode chamber and an undiluted liquid chamber, the cation transmission membrane between the undiluted liquid chamber and the treatment liquid chamber, and the anion transmission membrane and the cation transmission membrane between the treatment liquid chamber and the anode chamber, and
the cathode chamber and the anode chamber are filled with a sodium sulfate solution, the undiluted liquid chamber is filled with a vanadium oxide sulfate solution, and a treatment liquid chamber is filled with the sulfate solution, and ions move through the anion transmission membrane and the cation transmission membrane by supplying power to the cathode and the anode.

12. The method of claim 11, wherein a current amount flowing in each chamber is controlled so as to generate trivalence or tetravalence vanadium electrolyte.

13. The method of claim 12, wherein the current amount uses current 1.1 to 1.3 times higher than a critical current value and the critical current value is a current of 0.77 to 0.91 [A].

14. A selective ion densitometer, comprising:
a first measurement module including a potential controller and a first voltmeter measuring a potential difference between a comparative electrode and a reference electrode;
a second measurement module including a load resistor and a second voltmeter measuring a potential difference between an interaction electrode and the reference electrode;
an electrode unit arranged with the comparative electrode, the reference electrode, and the interaction electrode and having an anolyte and catholyte filled therein, and having an ion selective transmission membrane selectively transmitting a measurement target ion included in a measurement target sample formed on a bottom surface thereof; and
a controller calculating concentration of the measurement target ion using a potential difference measured in the first voltmeter and the second voltmeter.

15. The selective ion densitometer of claim 14, wherein the measurement target sample is a vanadium salt solution and the measurement target ion is vanadium ion.

16. The selective ion densitometer of claim 14, wherein the comparative electrode and the reference electrode are made of gold or platinum and the interaction electrode is made of silver or lead.

17. The selective ion densitometer of claim 14, wherein the anolyte and catholyte is 5 to 15% of acetic acid or sulfuric acid.

18. The selective ion densitometer of claim 14, wherein the ion selective transmission membrane is made of poly tetra fluoro ethylene or polyvinyl chloride.

19. The selective ion densitometer of claim 14, wherein the controller includes an arithmetic unit calculating the concentration of the vanadium ion by comparing the potential difference measured using a standard sample and the potential difference measured using the vanadium salt solution and a display unit displaying the calculated concentration of ions, and the standard sample is selected from at least any one of an iron (I) chloride solution, an iron (II) chloride solution, a chromium (III) chloride solution, and a vanady sulfate solution.

20. A method for measuring ion concentration measuring concentration of measurement target ion of a sample using a standard sample of which ion concentration is known, comprising:
sequentially contacting a reference liquid, a standard sample, and a measurement sample, respectively, to an electrode unit of a selective ion densitometer;
controlling a potential controller so that each voltage displayed on voltmeters due to the contact with the reference liquid, the standard sample, and the measurement sample becomes zero;
measuring ion potential by not applying current to load resistor; and
operating a relationship between ion concentration and potential of the potential controller using data in the controlling of the potential and the measuring of the ion potential.

21. A self-redox flow battery system, comprising:
a micro hydraulic power generation apparatus including a wing turbine rotating by water introduced through a conduct pipe and a DC power generator generating DC current by the rotation of the wing turbine; and
a redox flow battery including a multilayer electrode in which a plurality of unit electrodes are multilayered, a first electrolyte tank and a second electrolyte tank each storing an active material in different oxidation states, and a first pump and a second pump each connected to the first and second electrolyte tanks to circulate the active materials stored in the tanks through the multilayer electrode so as to perform charging and discharging through the hydraulic power generation apparatus.

22. The system of claim 21, wherein the micro hydraulic power generation apparatus includes a body and a DC power generator coupled with the upper portion of the body.

23. The system of claim 22, wherein a portion of the outside of the body of the micro hydraulic power generation apparatus is connected with a conduct pipe into which water is introduced and the other portion thereof is connected with a drain pipe from which water is discharged and the inside of the body is provided with a wing turbine, and
the drain pipe is branched in plural and nozzles installed at the ends of each branched conduct pipe are connected to the outside of the body so as to penetrate therethrough and water penetrating through the nozzle rotates the wing turbine.

24. The system of claim 21, wherein the micro hydraulic power generation apparatus is provided by mounting the wing turbine on a power generator for a compact car.

25. The system of claim 21, wherein the unit electrode includes two graphite plates and a thermoplastic film inserted between the graphite plates.

26. The system of claim 25, wherein the thermoplastic film is made of a material that suppresses a formation of pin holes and suppresses permeation of the electrolyte and a thickness thereof is 10 to 15 µm.

27. The system of claim 25, wherein the thermoplastic film is made of one or two or more mixtures or compounds of thermoplastic resin mixtures of polystyrene, polyethylene, polypropylene, polyethylene terephthalate, polyvinyl chloride, polycarbonate, polyvinylidene chloride, acetal, chimei, nylon, artificial rubber, synthetic rubber, ethylene, and vinyl acetate.
